**Europäisches Patentamt**

**European Patent Office**

**Office européen des brevets**

(11) Veröffentlichungsnummer: **0 030 608**
**B1**

(12) **EUROPÄISCHE PATENTSCHRIFT**

(45) Veröffentlichungstag der Patentschrift:
28.09.83

(51) Int. Cl.³: **F 16 D 65/10, F 16 D 65/827**

(21) Anmeldenummer: **80106562.4**

(22) Anmeldetag: **25.10.80**

(54) **Bremstrommel.**

(30) Priorität: **14.12.79 DE 2950281**

(43) Veröffentlichungstag der Anmeldung:
**24.06.81 Patentblatt 81/25**

(45) Bekanntmachung des Hinweises auf die Patenterteilung:
**28.09.83 Patentblatt 83/39**

(84) Benannte Vertragsstaaten:
**BE CH DE FR GB IT LI NL SE**

(56) Entgegenhaltungen:
**DE-C-494 660**
**FR-A-1 226 608**
**FR-E-92 344**
**US-A-1 878 006**
**US-A-1 923 432**
**US-A-2 671 535**
**US-A-2 998 870**
**US-A-3 213 976**

(73) Patentinhaber: **Bergische Achsenfabrik Fr. Kotz & Söhne, Am Ohlerhammer, D-5276 Wiehl 1 (DE)**

(72) Erfinder: **Ebbinghaus, Wilfried, Perkerstrasse 42, D-5276 Wiehl (DE)**
Erfinder: **Mollerus, Bernd, Immen 30, D-5276 Wiehl (DE)**

(74) Vertreter: **Stenger, Alex, Dipl.-Ing. et al, Patentanwälte Dipl.-Ing. A. Stenger Dipl.-Ing. W. Watzke Dipl.-Ing. H.J. Ring Kaiser-Friedrich-Ring 70, D-4000 Düsseldorf 11 (DE)**

Bremstrommel

Gegenstand der Erfindung ist eine Bremstrommel mit einem zylindrischen Mantel, wenigstens einer am freien Rand des Mantels unter einem spitzen Winkel zur Öffnung hin gerichtet angeformten oder angegossenen Verstärkungs- oder Kühlrippe, die an ihrer Innenseite eine konkav gekrümmte Auswurfschräge besitzt, und mit einem vor ihrer Öffnung angeordneten Abdeckblech, welches mit der Verstärkungs- oder Kühlrippe einen Dichtspalt bildet.

Bei den bekannten Bremstrommeln besitzen die auf der Außenseite des Mantels angeformten Verstärkungs- oder Kühlrippen in der Regel eine symmetrische Formgestaltung, die im Querschnitt beispielsweise dreieckig (R. Bussien »Automobiltechnisches Handbuch«, 16. Auflage, 1945, Seite 686) oder rechteckig sein kann, wobei die Mittel- oder Symmetrieebene aber stets im rechten Winkel zur Drehachse der Bremstrommel verläuft. Unmittelbar an dem der Öffnung zugewendeten Ende des Mantels ist in der Regel keine Verstärkungs- oder Kühlrippe angeordnet, weil dort die bekannten Bremstrommeln am äußeren Rand des vor ihrer Öffnung angeordneten Abdeckbleches umgriffen werden.

Aus der US-A-1 878 006 ist eine Bremstrommel mit einem zylindrischen Mantel und einer an der Außenseite angeformten Verstärkungs- oder Kühlrippe bekannt, vor deren Öffnung ein Abdeckblech angeordnet ist, welches mit der Verstärkungs- oder Kühlrippe einen Dichtspalt bildet. Die Verstärkungs- oder Kühlrippe ist jedoch im Querschnitt rechtwinklig geformt und der Rand des Abdeckbleches ist stumpf gegen die Innenwand der Verstärkungs- oder Kühlrippe gerichtet, so daß der Dichtspalt sich in axialer Richtung erstreckt. Da der Rand des Abdeckbleches entgegengesetzt zur rechtwinkligen Formgebung der Verstärkungs- oder Kühlrippe abgewinkelt ist, entsteht zwischen der Verstärkungs- oder Kühlrippe und dem Rand des Abdeckbleches ein verhältnismäßig großer Hohlraum, der sich von einem ersten Dichtspalt ausgehend zum zweiten Dichtspalt hin zunächst öffnet und dann wieder schließt.

Aus der US-A-1 923 432 ist eine Bremstrommel mit einem zylindrischen Mantel und einer daran angeformten Verstärkungs- oder Kühlrippe bekannt, die mit einer Übergangsschräge zunächst in radialer Richtung und dann in axialer Richtung geformt ist. Ein an der Innenseite vorgesehenes Abdeckblech besitzt einen mehrfach geknickten Rand, der zunächst der Übergangsschräge an der Verstärkungs- oder Kühlrippe folgt und dann radial nach außen abgewinkelt ist, so daß wiederum ein in axialer Richtung verlaufender Dichtspalt entsteht. Im Bereich des Dichtspaltes sind die Innenseiten der Verstärkungs- oder Kühlrippe und des Abdeckbleches parallel zueinander angeordnet.

Aus der DE-C-494 660 ist eine Backenbremse mit einem zylindrischen Mantel und einem als flache Scheibe ausgebildeten Abdeckblech bekannt, die stumpf gegeneinander gerichtet sind und einen in axialer Richtung verlaufenden, engen Dichtspalt bilden.

Aus der US-A-2 998 870 ist eine Bremstrommel bekannt, bei der am freien Rand des Mantels eine umlaufende Nut angeordnet ist, in die der freie Rand eines Abdeckbleches abgewinkelt eingreift und mit dem Boden der Nut einen Dichtspalt bildet.

Schließlich ist aus der US-A-3 213 976 noch eine Bremstrommelkonstruktion bekannt, bei der auf dem freien Rand eines Abdeckbleches eine Dichtlippe aus elastischem Material angeordnet ist, welche entweder einer Auswurfschräge der Bremstrommel anliegt oder mit dieser einen Dichtspalt bildet.

Die vorstehend beschriebenen, bekannten Bremstrommelkonstruktionen und Abdeckblech-Anordnungen haben gemeinsam den Nachteil, daß der Bremsbelagabrieb den Spalt zwischen der Bremstrommel und dem Abdeckblech mit der Zeit verstopft, so daß eingedrungener Schmutz und eingedrungenes Schmutzwasser nicht mehr ausreichend gut austreten können.

Davon ausgehend liegt der Erfindung die Aufgabe zugrunde, den Dichtspalt zwischen der Bremstrommel und dem Abdeckblech so auszubilden, daß der Bremsbelagabrieb sowie eingetretener Schmutz bzw. eingetretenes Spritzwasser besser austreten können.

Als technische Lösung dieser Aufgabe wird folgende Merkmalskombination vorgeschlagen:

a) daß der Rand des Abdeckbleches der konkaven Form der Verstärkungs- und Kühlrippe folgend so geformt ist, daß der Dichtspalt eine von innen nach außen sich konisch verjüngende Form besitzt, und

b) daß die Verstärkungs- und Kühlrippe und der Rand des Abdeckbleches annähernd in der gleichen, quer zum Achskörper verlaufenden Ebene enden.

Eine erfindungsgemäß ausgebildete Bremstrommel mit Abdeckblech hat den Vorteil, daß unter Beibehaltung eines das Eintreten von Schmutz und Spritzwasser bremsenden Dichtspaltes der Austritt des Bremsbelagabriebes erheblich verbessert ist, weil dieser entlang der Auswurfschräge unter Ausnutzung der Fliehkraft in dem sich konisch von innen nach außen verjüngenden Dichtspalt erfolgt. Außerdem bewirkt die erfindungsgemäß ausgebildete Bremstrommelkonstruktion und Abdeckblech-Anordnung einen gewissen Selbstreinigungseffekt, wenn der Dichtspalt sich bei starker Schmutz- und Spritzwassereinwirkung doch einmal verstopft haben sollte.

In der nachfolgenden Beschreibung der zugehörigen Zeichnung wird ein bevorzugtes Ausführungsbeispiel einer erfindungsgemäß ausgebildeten Bremstrommel beschrieben. In der Zeichnung zeigt

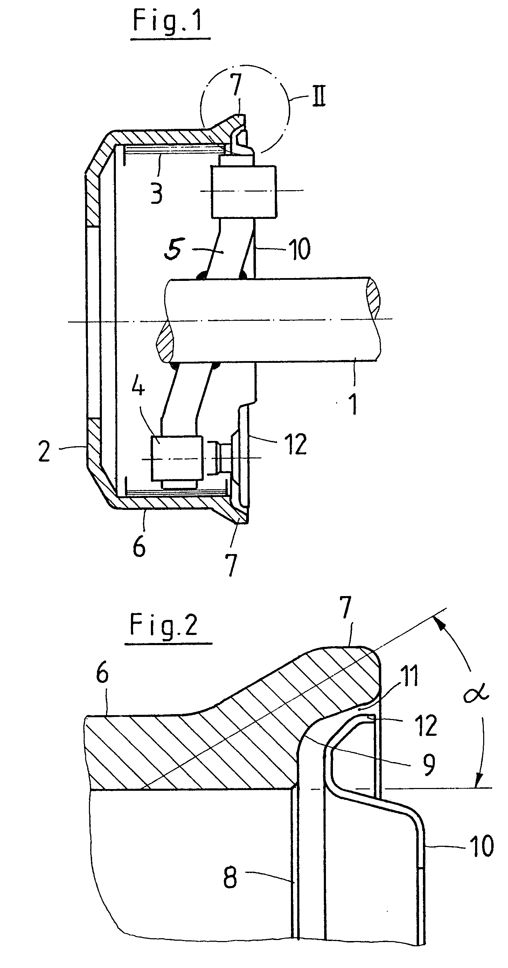

Fig. 1 eine Bremstrommel mit Abdeckblech im Querschnitt,

Fig. 2 einen vergrößerten Ausschnitt aus Fig. 1 entsprechend der strichpunktierten Linie II.

Auf einer, aus Gründen der Vereinfachung nicht dargestellten Nabe eines Achskörpers 1 ist eine Bremstrommel 2 drehbar befestigt. Innerhalb der Bremstrommel sind zwei schematisch dargestellte Bremsbacken 3 angeordnet, die sich an einem unteren Stützlager 4 abstützen, welches an einer mit dem Achskörper 1 verbundenen Bremsbrücke 5 befestigt ist.

Die Bremstrommel 2 besitzt an ihrem Mantel 6 eine am Ende angeformte bzw. angegossene Verstärkungs- und Kühlrippe 7. Die Verstärkungs- und Kühlrippe 7 ist nicht in radialer Richtung nach außen gerichtet, sondern unter einem spitzen Winkel $\alpha$ von etwa 30 bis 50° zum Mantel 6 abgeschrägt, so daß sie zur Öffnung 8 der Bremstrommel 2 hin eine Auswurfschräge 9 bildet, die in dem dargestellten Ausführungsbeispiel konkav gekrümmt ist.

Vor der Öffnung 8 der Bremstrommel 2 ist ein feststehendes und mit dem Achskörper 1 verbundenes Abdeckblech 10 angeordnet, welches mit der Auswurfschräge 9 der Verstärkungs- und Kühlrippe 7 einen Dichtspalt 11 bildet. Der Dichtspalt 11 ist von innen nach außen konisch verjüngt.

Das Abdeckblech 10 endet mit seinem Rand 12 annähernd in der gleichen Ebene wie die Verstärkungs- und Kühlrippe 7, um beim Transport der vorgefertigten Achse Beschädigungen des Abdeckbleches 10 zu vermeiden.

In der Bremstrommel 2 anfallender Bremsbelagabrieb, aber auch eingetretener Schmutz bzw. eingetretenes Spritzwasser wird unter Ausnutzung der Fliehkraft durch den Dichtspalt 11 ausgetragen.

Alle in der Beschreibung erwähnten und in der Zeichnung dargestellten neuen Merkmale sind erfindungswesentlich, auch soweit sie in den Ansprüchen nicht ausdrücklich beansprucht worden sind.

Bezugszeichenliste
1 Achskörper
2 Bremstrommel
3 Bremsbacken
4 Stützlager
5 Bremsbrücke
6 Mantel
7 Verstärkungs- und Kühlrippe
8 Öffnung
9 Auswurfschräge
10 Abdeckblech
11 Dichtspalt
12 Rand

## Patentanspruch

Bremstrommel mit einem zylindrischen Mantel (6), wenigstens einer am freien Rand des Mantels (6) unter einem spitzen Winkel $\alpha$ zur Öffnung (8) hin gerichtet angeformten oder angegossenen Verstärkungs- oder Kühlrippe (7), die an ihrer Innenseite eine konkav gekrümmte Auswurfschräge (9) besitzt, und mit einem vor ihrer Öffnung angeordneten Abdeckblech (10), welches mit der Verstärkungs- oder Kühlrippe (7) einen Dichtspalt bildet, dadurch gekennzeichnet, daß der Rand (12) des Abdeckbleches (10) der konkaven Form der Verstärkungs- und Kühlrippe (7) folgend so geformt ist, daß der Dichtspalt (11) eine von innen nach außen sich konisch verjüngende Form besitzt, und daß die Verstärkungs- und Kühlrippe (7) und der Rand (12) des Abdeckbleches (10) annähernd in der gleichen, quer zum Achskörper (1) verlaufenden Ebene enden.

## Claim

Brake drum with a cylindrical chell (6), with at least one reinforcing or cooling rib (7) which, directed at an acute angle $\alpha$ to the orifice (8), is moulded or cast on the free edge of the shell (6) and which has a concavely curved discharge slope (9) on its inner face, and with a cover plate (10) which is located in front of the brake-drum orifice and which forms together with the reinforcing or cooling rib (7) a sealing gap, characterised in that the edge (12) of the cover plate (10) is shaped to follow the concave form of the reinforcing and cooling rib (7), so that the sealing gap (11) has a form which tapers conically from the inside outwards, and in that the reinforcing and cooling rib (7) and the edge (12) of the cover plate (10) end approximately in the same plane extending transversely to the axle body (1).

## Revendication

Tambour de frein comportant une enveloppe cylindrique (6), au moins une ailette (7) de renforcement ou de refroidissement, formée ou moulée sur le bord libre de l'enveloppe (6) sous un angle aigu $\alpha$ et dirigée en direction de l'ouverture (8), ladite ailette (7) possédant sur sa face inférieure une pente d'évacuation de forme incurvée concave et une tôle de protection (10) disposée devant son ouverture et qui forme avec l'ailette (7) de renforcement ou de refroidissement un interstice d'étanchéité, caractérisé en ce que le bord (12) de la tôle de protection (10) est conformé en suivant la forme concave de l'ailette (7) de renforcement et de refroidissement, en ce que l'interstice d'étanchéité (11) possède une forme cônique se rétrécissant de l'intérieur vers l'extérieur et en ce que l'ailette (7) de renforcement et de refroidissement et le bord (12) de la tôle de protection (12) se terminent approximativement dans le même plan s'étendant perpendiculaire au corps d'essieu (1).

## Fig.1

## Fig.2